# EUROPEAN PATENT SPECIFICATION

(11) **EP 4 698 831 B1**
(45) Date of publication and mention of the grant of the patent: **15.07.2026**
(21) Application number: 25717384.9
(22) Date of filing: 06.03.2025
(51) Int. Cl.: F24F 12/00, F24F 13/20, F24F 13/24, F24F 13/08

(54) **VENTILATION APPLIANCE**
LÜFTUNGSGERÄT
APPAREIL DE VENTILATION

(30) Priority: 07.03.2024 IT 202400005161
(43) Date of publication of application: 25.02.2026
(73) Proprietor: Vortice S.p.A., 20067 Tribiano (IT)
(72) Inventor: MIORIN, Fabrizio, 30030 Martellago (VE) (IT); ILARDI, Antonello, 20080 Bubbiano (MI) (IT); TAGHOUTI, Mohamed, 20067 Paullo (MI) (IT); BIANCHI, Jacopo, 20152 Milano (MI) (IT)
(74) Representative: Petraz, Davide Luigi
(86) International application number: PCT/IT2025/050045
(87) International publication number: WO 2025/186852

(56) References cited:
- WO-A1-2010/109662
- CN-A- 1 938 552
- KR-A- 20220 102 964

## Description

### FIELD OF THE INVENTION

The present invention concerns a ventilation appliance, in particular a decentralized ventilation appliance for heat recovery.

### BACKGROUND OF THE INVENTION

As is known, there are decentralized ventilation appliances for heat recovery comprising a casing inside which a heat exchanger is positioned, generally of the plate and cross-flow type.

These ventilation appliances can be used for installation in residential and commercial premises of new buildings, or ones undergoing renovation, in order to improve energy efficiency.

These ventilation appliances are installed inside a certain environment to guarantee proper air exchange thereof, prevent excessive humidity and the onset of mold on walls.

The casing can be provided with a cover in which an aperture for the entry of the stale air coming from the environment to be ventilated and an aperture for the exit of the renewal air coming from the outside are created, on a same side. These air flows are generated by means of suitable impellers positioned inside the casing.

However, these ventilation appliances have some disadvantages, for example the fact that the apertures for the entry of the stale air and for the exit of the renewal air are positioned on a same side of the appliance, so the flows can affect each other causing unwanted recirculation phenomena, a decrease in the appliance's efficiency and therefore a limited air renewal capacity.

In addition, the direction in which the renewal air flow exits is not always optimal to ensure a good distribution inside the environment to be ventilated.

In addition, the paths of the stale air and of the renewal air inside the casing are often not optimal from a fluid-dynamic point of view, therefore the distribution of the air flows can be improved. Furthermore, as mentioned above, unwanted phenomena of reciprocal influence can occur inside the casing between the stale air flow and the recirculating air flow. These fluid-dynamic and air distribution deficiencies inside the casing can result in an unsatisfactory penetration of the renewal air into the environment, and a non-optimal diffusion and thermal mixing of the air introduced, generating unwelcome impacts and preventing the perception of a sense of freshness and cleanliness of the air renewal.

These appliances can also be improved in terms of noise, aesthetics, overall dimensions and operating efficiency in general.

Other known appliances are disclosed in documents CN1938552A and KR20220102964A.

There is therefore the need to perfect a ventilation appliance that can overcome at least one of the disadvantages of the state of the art.

In particular, one purpose of the present invention is to provide a ventilation appliance that is compact and has optimized aesthetics, such as to guarantee high operating efficiency and optimal integration into the environment in which it is installed.

Another purpose of the present invention is to provide a ventilation appliance in which the flows of stale air drawn from the environment to be ventilated and of renewal air drawn from the outside do not influence each other, or at least do so in a drastically limited manner compared to what occurs in known appliances.

Another purpose of the present invention is to provide a ventilation appliance that guarantees high penetration of the renewal air inside the environment, and optimal diffusion and thermal mixing of the air introduced, so as to prevent unwelcome effects and at the same time perceive the sense of freshness and cleanliness of the air renewal.

Another purpose of the present invention is to provide an efficient ventilation appliance with low acoustic impact.

The Applicant has devised, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the present invention or variants to the main inventive idea.

In accordance with the above purposes, a ventilation appliance according to the present invention comprises a casing in which a heat exchanger is housed which allows a heat exchange between the air to be renewed coming from inside an environment and the renewal air coming from outside the environment.

On one side of the casing the ventilation appliance is provided with a panel separated from a frame by means of an interspace which defines, on different sides, at least a first aperture for the entry of the air to be renewed and at least a second aperture for the exit of the renewal air.

According to one aspect of the invention, the casing comprises a plate in which there are created one or several first channelings, in this example one, configured to create a narrowing of the passage section of the air to be renewed from the first aperture to the heat exchanger, and one or more second channelings, in this example two, separated from said first channeling by means of at least one separation panel and configured to create an enlargement of the passage section of the renewal air from the heat exchanger toward the second aperture.

Advantageously, by means of the present ventilation appliance it is possible to guarantee a high efficiency of heat recovery and air exchange inside an environment, preventing or drastically limiting any unwanted phenomena of interference between the draw of air to be renewed from inside the environment and the delivery of the renewal air drawn from the outside.

Furthermore, the present ventilation appliance guarantees a high penetration of the renewal air inside the environment, and an optimal diffusion and thermal mixing of the air introduced, so as to prevent unwelcome impacts and at the same time perceive the sense of freshness and cleanliness of the air renewal.

According to another aspect of the invention, the apertures extend substantially for the entire length or for most of the respective sides of the interspace, defining thinned and elongated passages for the air to be renewed and for the renewal air. The passages defined by the apertures further contribute to increasing the effectiveness of the suction of stale air, and the penetration and distribution of the renewal air into the environment.

According to another aspect of the invention, in the first channeling the air to be renewed follows a substantially unidirectional path so as to flow from the first aperture to the heat exchanger, while the renewal air, having exited from the heat exchanger, enters the plate and the one or more second channelings in which, by curving, it reverses its flow direction until it reaches the second aperture.

According to another aspect of the invention, the frame comprises a plurality of edges inside which respective partitions are provided for separating the channelings.

According to another aspect of the invention, the first channeling is defined by a separation panel having two segments which extend starting from the ends of the first aperture substantially until the second aperture, where they are connected by a curved segment.

According to another aspect of the invention, the separation panel separating the first channeling from the one or more second channelings is substantially U-shaped and comprises two segments which extend starting from the second aperture and are connected by a curved segment located in front of one or more ducts for the entry of the renewal air into the plate.

According to another aspect of the invention, the one or more second channelings are defined by the separation panel on one side, in particular by one of the segments and by the curved segment, and by another separation panel on the other side which, curving, extends from the ducts until the second aperture.

According to another aspect of the invention, diverters are positioned in the one or more ducts by means of which the flow of air is divided into several components.

According to another aspect of the invention, additional diverters are positioned in the one or more second channelings, configured to keep the flow as divided by the diverters of the one or more entry ducts.

According to another aspect of the invention, the additional diverters are curved so as to gradually and uniformly vary the direction of the air, until substantially reversing its direction.

According to another aspect of the invention, if several second channelings are provided, they are divided by a curvilinear shaped separation panel which extends from the exit of the one or more ducts to the proximity of the second aperture.

According to another aspect of the invention, the first aperture is created on a side of the interspace opposite to the one where the second aperture is created.

According to another aspect of the invention, the first aperture is positioned on the lower side of the interspace, that is, the side substantially facing toward the ground of the environment to be ventilated, and the second aperture is positioned on the upper side of the interspace, that is, the side substantially facing toward the ceiling of the environment to be ventilated.

According to another aspect of the invention, the interspace is annular and therefore completely surrounds the panel.

According to another aspect of the invention, the interspace has a substantially constant thickness.

According to another aspect of the invention, the panel and the frame are substantially coplanar.

According to another aspect of the invention, the ventilation appliance comprises a cover removably connected to the casing and provided with the panel and the frame which are separated by the interspace.

According to another aspect of the invention, the ventilation appliance comprises a sound-absorbing device installed downstream of an impeller for suction of the renewal air inside the casing.

According to another aspect of the invention, the sound-absorbing device is positioned beside the one or more ducts for the entry of the air onto the plate.

According to another aspect of the invention, the casing comprises outlets for the exit of the air coming from the heat exchanger and inlets for the entry of the renewal air into the heat exchanger, in which respective non-return valves are integrated.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a three-dimensional view of a ventilation appliance according to the present invention, installed semi-recessed in a wall of an environment to be ventilated;
- fig. 2 is a three-dimensional view of the ventilation appliance installed wall-mounted;
- fig. 3 is a front view of the present ventilation appliance;
- fig. 4 is a top view of the present ventilation appliance;
- fig. 5 is a first three-dimensional front view of the interior of the present ventilation appliance;
- fig. 6 is a second three-dimensional front view of the interior of the present ventilation appliance;
- fig. 7 is a rear three-dimensional view of the interior of the present ventilation appliance;
- fig. 8 is a rear three-dimensional view of the present ventilation appliance;
- fig. 9 is a partial rear three-dimensional view of the present ventilation appliance.

We must clarify that the phraseology and terminology used in the present description, as well as the figures in the attached drawings also in relation as to how described, have the sole function of better illustrating and explaining the present invention, their purpose being to provide a non-limiting example thereof, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

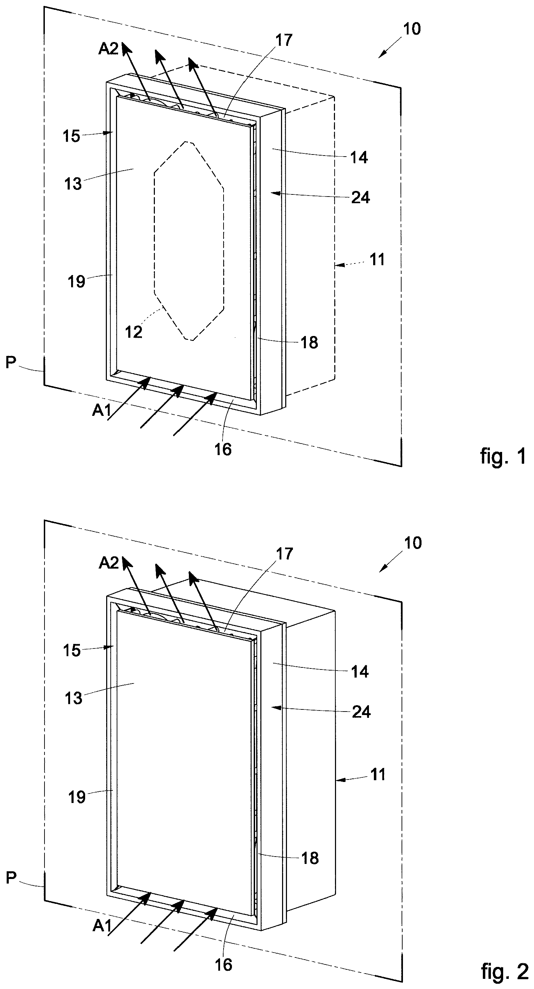

With reference to the attached drawings, see in particular fig. 1, fig. 2 and fig. 3, a ventilation appliance 10 comprises a casing 11, in which a heat exchanger 12 is housed that allows a heat exchange between the air A1 coming from inside an environment to be ventilated and the renewal air A2 coming from outside the environment. The heat exchanger 12 can be of the plate and cross-flow type. In the heat exchanger 12, the air A1 transfers heat to the air A2, without mixing therewith.

The ventilation appliance 10 is provided on one side of the casing 11 with a panel 13 separated from a frame 14 by means of a hollow space, or interspace, 15 that defines at least a first aperture 16 for the entry of the air A1 and at least a second aperture 17 for the exit of the air A2, which are positioned on different sides of the interspace 15. In particular, the apertures 16 and 17 are created on opposite sides of the interspace 15 and therefore of the ventilation appliance 10, in order to guarantee a greater distance between the two flows of air A1 and A2. In this example, the first aperture 16 is positioned on the lower side of the interspace 15, that is, the side facing substantially toward the ground of the environment to be ventilated. The second aperture 17 is positioned on the upper side of the interspace 15, that is, the side facing substantially toward the ceiling of the environment to be ventilated. In this case, therefore, the air A1 to be renewed is drawn from below while the renewal air A2 coming from the outside is delivered upward. This solution guarantees an effective air exchange and a high penetration of the flow of renewal air A2 inside the environment.

Alternatively, an equally effective solution provides that a first aperture 18 for the air A1 can be created on the right or left side of the interspace 15, and a second aperture 19 can be created on the left or right side. In this case, the flows of air A1 and A2 would be substantially horizontal, rather than substantially vertical, as in the case of the apertures 16 and 17. Other solutions can be provided in which the air A1 enters for example from the lateral aperture 18 and exits from the aperture 17 at the top.

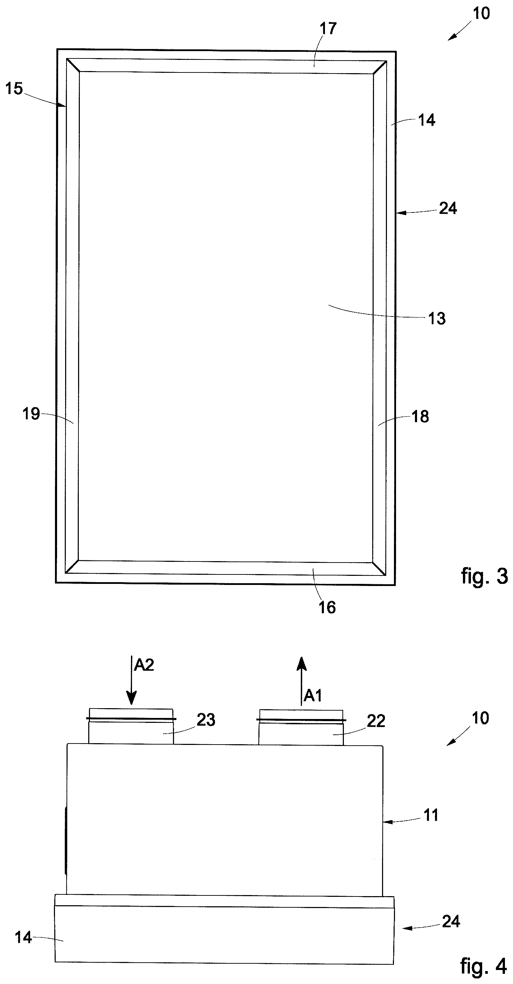

In fig. 1, the ventilation appliance 10 is installed semi-recessed in a wall P of the environment to be ventilated, while in fig. 2 the ventilation appliance 10 is installed on the wall P. In both cases, see also fig. 4, behind the casing 11 there are created an outlet 22 for the exit of the air A1 and an inlet 23 for the entry of the air A2. The air A1 contained inside the environment to be ventilated is generally warm and with a certain humidity, while the renewal air A2 is fresher, dryer and drawn from outside building where the environment is located. The outlet 22 and inlet 23 are created communicating fluidically with the outside of the building by means of pipes or suchlike, so as to allow the air A1 to exit and the air A2 to enter.

The frame 14 has a greater height and width than the casing 11, so as to suitably rest, for example, on the wall P in the installation of fig. 1.

The interspace 15 is preferably annular, therefore it completely surrounds the panel 13, see in particular fig. 3. The interspace 15 preferably has a constant thickness comprised between about 10 mm and about 20 mm, and in particular of about 15 mm.

The apertures 16, 17, 18, 19 extend substantially for the entire length, or for a large part, for example most, of the respective sides of the interspace 15, thus defining thinned and elongated passages for the air A1 and for the air A2. The apertures 16, 17, 18, 19 are therefore substantially linear slots from which the air A1 and A2 passes with flows of limited thickness with respect to the length of the sides.

The panel 13 is preferably coplanar to the frame 14. Alternatively, the panel 13 can protrude slightly toward the inside of the environment to be ventilated with respect to the frame 14. In both cases, the present ventilation appliance 10 proves to be extremely compact. In addition, in the semi-recessed configuration of fig. 1, the ventilation appliance 10 has, overall, a limited thickness and a small bulk, thus integrating into the surrounding environment as a picture or suchlike.

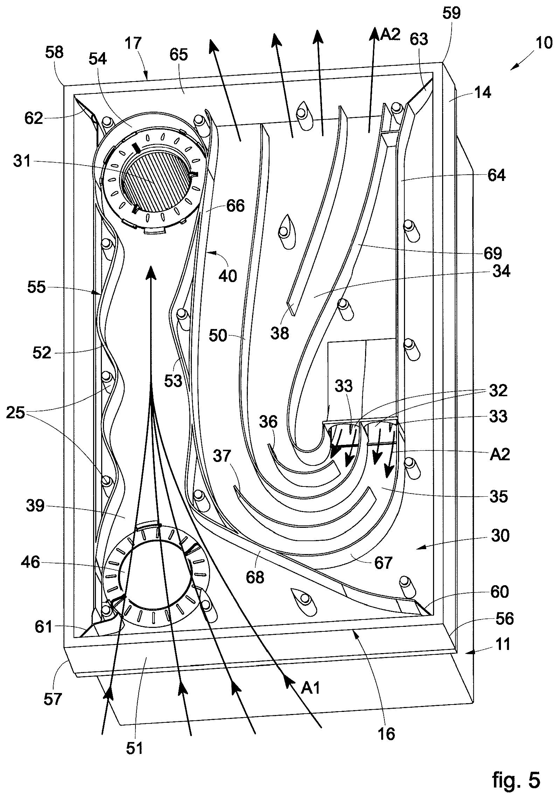

The panel 13 and the frame 14 are part of a cover 24 that is removably applied on the casing 11, for example snap-fit, interlocking, by means of attachment pins 25 or other (fig. 5).

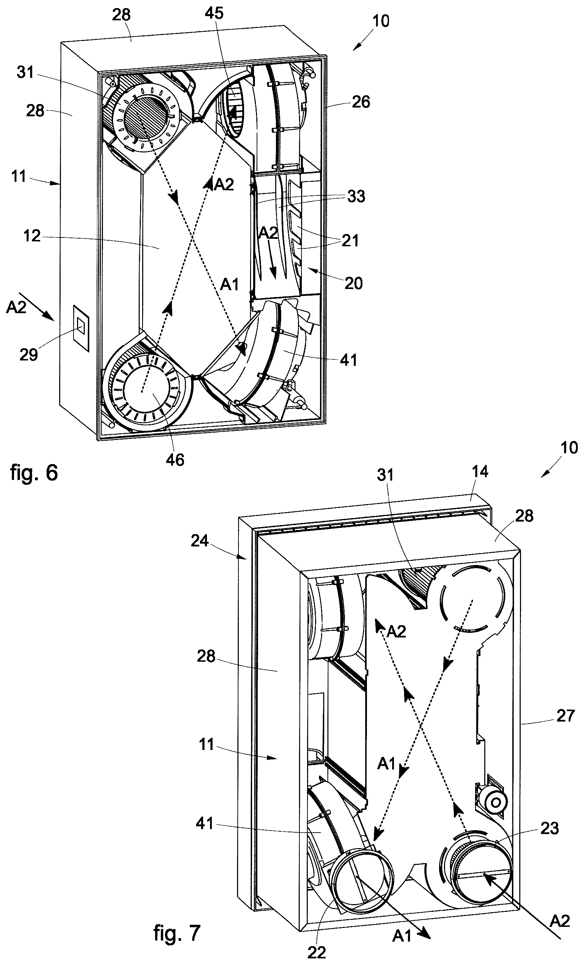

The casing 11, see fig. 6 and fig. 7, is substantially a box-like body defined by a front side 26 and a rear side 27 with a larger section, and four perimeter sides 28 with a smaller section. The cover 24 is housed on the front side 26, which is open. In the wall-mounted installation of fig. 2, a display 29 can be housed on one of the perimeter sides 28, which for example gives information on the operation of the ventilation appliance 10. The rear side 27 is placed adjacent to the wall P. In the semi-recessed version of fig. 1, the display is positioned outside the ventilation appliance 10, for example on a wall of the environment to be ventilated.

Under the panel 13, see in particular fig. 5 and fig. 6, a plate 30 is housed in the casing 11 on which passage paths for the air A1 and the air A2 are created. In the plate 30 there are created at least a first channeling 39, configured to create a narrowing of the passage section of the air A1 to be renewed from the first aperture 16, 18 to the heat exchanger 12, and one or more second channelings 34, 35, separated from the first channeling 39 by means of at least one separation panel 40 and configured to create an enlargement of the passage section of the renewal air A2 from the heat exchanger 12 toward the second aperture 17, 19.

The frame 14 comprises a plurality of edges 56, 57, 58, 59, in particular four, inside which respective partitions 60, 61, 62, 63 for separating the channelings 39 and 34, 35 are provided, so as to prevent or at least drastically limit any unwanted phenomena of interference between the flows of air A1 and A2. The partitions 60, 61, 62, 63 are directed substantially diagonally.

In particular, the air A1 comes from below from the aperture 16 and flows substantially across all of the plate 30 through a corresponding channeling 39, until it reaches a filter 31 located in the proximity of the top and upstream of the heat exchanger 12. Substantially, the passage section of the air A1 through the channeling 39 narrows from the aperture 16 to the entry of the heat exchanger 12, therefore from the aperture to the filter 31. To create the channeling 39, a separation panel 55 is provided having two segments 52, 53 that extend starting from the ends of the first aperture 16 substantially until the second aperture 17, where they are connected by a curved segment 54. The two segments 52 and 53 then extend from a wall 51 of the frame 14 where the aperture 16 is positioned substantially until a wall 65 of the frame 14 where the aperture 17 is positioned, then substantially run along the entire plate 30 and are closed by the curved segment 54. The wall 51 is opposite the wall 65. The segments 52 and 53 can have a substantially linear or undulating shape. One of these segments, in this case the segment 53, comprises a diagonal segment 68 that extends until the edge 56 of the frame 14, so that the channeling 39, at entry, affects the entire extension of the aperture 16, then gradually narrows. The other segment 52 starts from the edge 57 of the aperture 16 opposite to the edge 56. The partitions 60 and 61 are part of the segments 52 and 53, representing their final end toward the wall 51. The partition 62 is the final end of the segment 52 toward the edge 58 of the wall 65.

The renewal air A2 coming from one or more ducts 32 for entry into the plate 30 first flows through a downward segment, is curved and then sent toward the aperture 17.

The channelings 39 for the air A1 and 34, 35 for the air A2 are separated by a suitably shaped separation panel 40, which allows, once the panel 13 is inserted, to prevent unwanted air leaks between the channeling 39 and the channelings 34, 35, and vice versa. The separation panel 40 is substantially U-shaped and comprises a first segment 64 extending from the edge 59 of the frame 14 on the side of the aperture 17, and a second segment 66 extending from an intermediate zone between the edges 58 and 59 of the wall 65. The segments 64 and 66 are connected by a curved segment 67. The partition 63 is part of the segment 64 of the separation panel 40, representing the final end thereof. The curved segment 67 is located in front of the ducts 32 for the entry of the air A2, so that it determines its curvature toward the aperture 17.

The channelings 34, 35, in this case two, but there could also be one or more than two, are defined by the separation panel 40 on one side, in particular by the segment 66 and by the curved segment 67 that reaches the ducts 32, and by a separation panel 69 on the other side, which starts from the ducts 32 and, curving, extends until the wall 65 where the aperture 17 is positioned. The separation panel 69 reaches the proximity of the edge 59.

Looking at the various arrows of fig. 5, in the channeling 39 the air A1 to be renewed follows a substantially unidirectional path in a first direction, for example from the bottom upward, to reach the filter 31 and then the heat exchanger 12. The renewal air A2, having exited from the heat exchanger 12, first follows a path in a second direction under the plate 30, for example from the top downward, and then, by curving, is directed in a third direction substantially opposite to the second direction, when it enters the plate 30 through the ducts 32 and flows through the channelings 34, 35. As can be seen from the arrows of fig. 5, the air A1 and the air A2, in the upper part of the ventilation appliance 10, flow substantially in the same direction inside the respective channelings 39 and 34, 35.

Diverters 33, see also fig. 6, can be positioned in the ducts 32, by means of which the flow of air A2 can be divided into several components. Each of the ducts 32 generates a flow of air A2 which is kept and guided on the plate 30, in particular by means of the channelings 34 and 35, in this example two. Additional diverters 36 and 37 are located inside the channelings 34 and 35 to keep the flow as divided by the diverters 33 of the ducts 32, in this case split. The diverters 36 and 37 are curved so as to gradually and uniformly vary the direction of the air A2, until substantially reversing its direction. An additional diverter 38 is located in the channeling 34 in the proximity of the exit aperture 17.

Two ducts 32 can be provided, each equipped with an internal diverter 33, therefore a flow of air A2 with four components is generated, which are directed in pairs into the two channelings 34, 35.

The channelings 34 and 35, which could also be more than two, are divided by a curvilinear shaped separation panel 50 extending from the exit of the ducts 32 to the proximity of the internal wall 65 of the frame 14.

The division of the flow of air A2 into several components allows to obtain a better and more uniform distribution of the air along the plate 30 and inside the ventilation appliance 10.

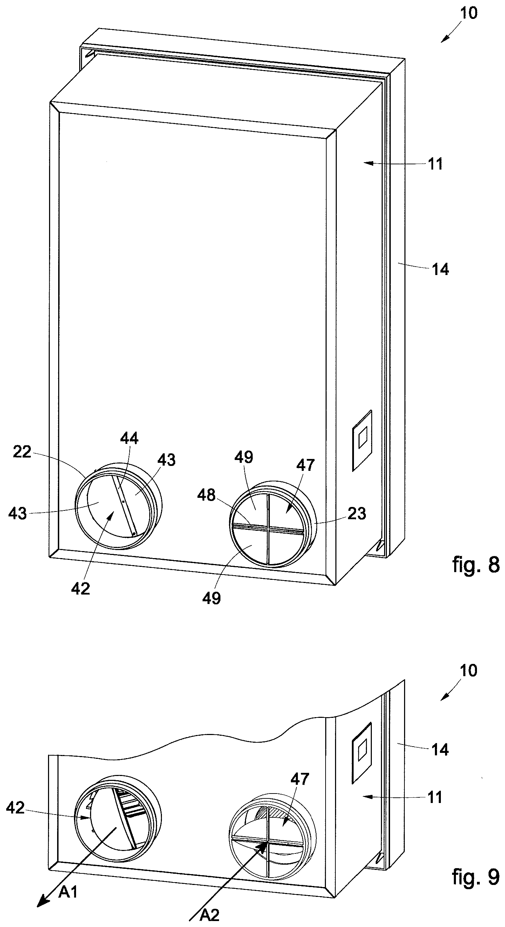

The air A1 is drawn by means of an impeller 41 located inside the casing 11 in a position crosswise with respect to the filter 31, see fig. 6 and fig. 7. The air A1 flows through the heat exchanger 12 from top to bottom and is discharged through the outlet 22, see also fig. 8 and fig. 9. A non-return valve 42 is integrated in the outlet 22, which opens automatically upon the passage of a flow of air A1 toward the outside, and closes in the absence of a flow, therefore upon the shutdown of the ventilation appliance 10. Fig. 9 shows an open configuration of the non-return valve 42, while fig. 8 and fig. 7 show the closed configuration. The non-return valve 42 can be formed by two flaps 43 that open or close around a support 44. The flaps 43 can be made using thin polyethylene terephthalate films, or suchlike.

The renewal air A2, please see again figs. from 6 to 9, is drawn from the outside by the inlet 23, by means of an impeller 45 positioned crosswise with respect to a filter 46 located downstream of the inlet 23. The air A2 exiting from the filter 46 enters into the heat exchanger 12, where it is heated as a result of the heat exchange with the air A1. The impeller 45 is positioned at the exit of the heat exchanger 12, sending the air A2 toward the ducts 32 for access to the plate 30 and therefore to the channelings 34, 35. From the impeller 45 the air A2 then flows through a downward segment until the ducts 32, to then rise through the channelings 34, 35 toward the exit aperture 17. The air A2 flowing from the ducts 32 to the aperture 17 through the channelings 34, 35 finds a substantially increasing passage section from the ducts 32 to the exit aperture 17.

A non-return valve 47 is integrated in the inlet 23, please see fig. 8 and fig. 9, which opens automatically upon the passage of a flow of air A2 toward the inside, and closes in the absence of a flow, therefore upon the shutdown of the ventilation appliance 10. This non-return valve 47 is similar to the non-return valve 42, therefore it comprises a support 48 and flaps 49, but operates in the opposite direction with respect to the non-return valve 42.

These non-return valves 42 and 47 therefore advantageously allow to prevent flows of air A1 and A2 in opposite directions with respect to what established and shown.

The ventilation appliance 10 comprises a sound-absorbing device 20, see fig. 6, which improves its quietness. In particular, the sound-absorbing device 20 is positioned in an entry zone of the air A2, that is, in particular, downstream of the impeller 45. More specifically, the sound-absorbing device 20 is positioned beside the ducts 32 for entry onto the plate 30 and therefore into the channelings 34, 35. The sound-absorbing device 20 can comprise a series of acoustic panels 21 placed side-by-side made of melamine or suchlike.

With the present ventilation appliance 10 it is possible to guarantee a high efficiency of heat recovery and air exchange within an environment, preventing or drastically limiting any unwanted phenomena of interference between the draw of air to be renewed from inside the environment and the delivery of renewal air drawn from the outside.

The ventilation appliance 10, in addition to guaranteeing a correct air exchange, is also advantageous in preventing excess moisture in the environment and the onset of mold on walls.

The present ventilation appliance 10 can be integrated into new buildings or ones undergoing renovation, and is therefore easy to install, it combines high levels of heat exchange efficiency, low consumption and low noise emissions.

It is clear that modifications and/or additions of parts may be made to the ventilation appliance as described heretofore, without thereby departing from the scope of the present invention, as defined by the claims.

It is also clear that, although the present invention has been described with reference to some specific examples, a person of skill in the art will be able to achieve other equivalent forms of ventilation appliance, having the characteristics as set forth in the claims and hence all coming within the field of protection defined thereby.

In the following claims, the sole purpose of the references in brackets is to facilitate their reading and they must not be considered as factors restricting the field of protection defined by the claims.

## Claims

1. Ventilation appliance (10), comprising a casing (11) in which a heat exchanger (12) is housed which allows a heat exchange between the air (A1) to be renewed coming from inside an environment and the renewal air (A2) coming from outside said environment, wherein on one side of said casing (11) there is positioned a panel (13) separated from a frame (14) by means of an interspace (15) which defines, on different sides, at least a first aperture (16, 18) for the entry of said air (A1) to be renewed and at least a second aperture (17, 19) for the exit of said renewal air (A2), **characterized in that** said casing (11) comprises a plate (30) in which there are created at least a first channeling (39), configured to create a narrowing of the passage section of said air (A1) to be renewed from said first aperture (16, 18) to said heat exchanger (12), and one or more second channelings (34, 35), separated from said first channeling (39) by means of at least one separation panel (40) and configured to create an enlargement of the passage section of said renewal air (A2) from said heat exchanger (12) toward said second aperture (17, 19).

2. Ventilation appliance (10) as in claim 1, **characterized in that** said apertures (16, 17, 18, 19) extend substantially for the entire length or for most of the respective sides of said interspace (15), defining thinned and elongated passages for the air (A1, A2), therefore with a limited thickness compared to the length.

3. Ventilation appliance (10) as in any claim hereinbefore, **characterized in that** in said first channeling (39) said air (A1) to be renewed follows a substantially unidirectional path to flow from said first aperture (16, 18) to said heat exchanger (12), while said renewal air (A2), having exited from the heat exchanger (12), enters said plate (30) and said one or more second channelings (34, 35) in which, by curving, it reverses its flow direction until it reaches said second aperture (17, 19).

4. Ventilation appliance (10) as in any claim hereinbefore, **characterized in that** said frame (14) comprises a plurality of edges (56, 57, 58, 59) inside which respective partitions (60, 61, 62, 63) are provided for separating said channelings (39, 34, 35).

5. Ventilation appliance (10) as in any claim hereinbefore, **characterized in that** said first channeling (39) is defined by a separation panel (55) having two segments (52, 53) which extend starting from the ends of said first aperture (16, 18) substantially until said second aperture (17, 19), where they are connected by a curved segment (54).

6. Ventilation appliance (10) as in any claim hereinbefore, **characterized in that** said separation panel (40) separating said first channeling (39) from said one or more second channelings (34, 35) is substantially U-shaped and comprises two segments (64, 66) which extend starting from said second aperture (17, 19) and are connected by a curved segment (67) located in front of one or more ducts (32) for the entry of said renewal air (A2) into said plate (30).

7. Ventilation appliance (10) as in claim 6, **characterized in that** said one or more second channelings (34, 35) are defined on one side by said separation panel (40) and, on the other side, by a separation panel (69) which, curving, extends from said ducts (32) until said second aperture (17, 19).

8. Ventilation appliance (10) as in claim 6 or 7, **characterized in that** diverters (33) are positioned in said one or more ducts (32) by means of which the flow of air (A2) is divided into several components.

9. Ventilation appliance (10) as in claim 8, **characterized in that** additional diverters (36, 37) are positioned in said one or more second channelings (34, 35), configured to keep the flow as divided by said diverters (33) of said one or more ducts (32).

10. Ventilation appliance (10) as in claim 9, **characterized in that** said additional diverters (36, 37) are curved so as to gradually and uniformly vary the direction of the air (A2), until substantially reversing its direction.

11. Ventilation appliance (10) as in any claim hereinbefore, **characterized in that** if several second channelings (34, 35) are provided, they are divided by a curvilinear shaped separation panel (50) which extends from the exit of said one or more ducts (32) to the proximity of said second aperture (17, 19).

12. Ventilation appliance (10) as in any claim hereinbefore, **characterized in that** said first aperture (16, 18) is created on a side of said interspace (15) opposite to the one where said second aperture (17, 19) is created.

13. Ventilation appliance (10) as in claim 12, **characterized in that** said first aperture (16, 18) is positioned on the lower side of said interspace (15) and said second aperture (17, 19) is positioned on the upper side of said interspace (15).

14. Ventilation appliance (10) as in any claim hereinbefore, **characterized in that** said interspace (15) is annular and therefore completely surrounds said panel (13).

15. Ventilation appliance (10) as in claim 14, **characterized in that** said interspace (15) has a substantially constant thickness.

16. Ventilation appliance (10) as in claim hereinbefore, **characterized in that** said panel (13) and said frame (14) are substantially coplanar.

17. Ventilation appliance (10) as in any claim hereinbefore, **characterized in that it** comprises a cover (24) removably connected to said casing (11) and provided with said panel (13) and said frame (14) which are separated by said interspace (15).

18. Ventilation appliance (10) as in any claim hereinbefore, **characterized in that** it comprises a sound-absorbing device (20) installed downstream of an impeller (45) for suction of said renewal air (A2) inside said casing (11).

19. Ventilation appliance (10) as in claim 18, **characterized in that** said sound-absorbing device (20) is positioned beside said one or more ducts (32) for the entry of the air (A2) onto the plate (30).

20. Ventilation appliance (10) as in any claim hereinbefore, **characterized in that** said casing (11) comprises an outlet (22) for the exit of the air (A1) coming from said heat exchanger (12) and an inlet (23) for the entry of the renewal air (A2) into said heat exchanger (12), in which respective non-return valves (42, 47) are integrated.

## Patentansprüche

1. Belüftungsvorrichtung (10), die ein Gehäuse (11) aufweist, in dem ein Wärmetauscher (12) untergebracht ist, der einen Wärmetausch zwischen der zu erneuernden Luft (A1), die aus dem Inneren einer Umgebung kommt, und der erneuerten Luft (A2), die von außerhalb der Umgebung kommt, ermöglicht, wobei an einer Seite des Gehäuses (11) eine Wand (13) positioniert ist, die von einem Rahmen (14) mittels eines Zwischenraums (15) getrennt ist, der an verschiedenen Seiten mindestens eine erste Öffnung (16, 18) für den Zugang der zu erneuernden Luft (A1) und mindestens eine zweite Öffnung (17, 19) für den Ausgang der erneuerten Luft (A2) definiert, **dadurch gekennzeichnet, dass**
das Gehäuse (11) eine Platte (30) aufweist, in der mindestens eine erste Kanalführung (39) erzeugt ist, die so konfiguriert ist, dass sie eine Verengung des Durchlassabschnitts der zu erneuernden Luft (A1) von der ersten Öffnung (16, 18) zu dem Wärmetauscher (12) erzeugt, und eine oder mehrere zweite Kanalführungen (34, 35), die von der ersten Kanalführung (39) mittels mindestens einer Trennwand (40) getrennt sind und so konfiguriert sind, dass sie eine Erweiterung des Durchlassabschnitts der erneuerten Luft (A2) von dem Wärmetauscher (12) in Richtung der zweiten Öffnung (17, 19) erzeugt.

2. Belüftungsvorrichtung (10) nach Anspruch 1, **dadurch gekennzeichnet, dass** die Öffnungen (16, 17, 18, 19) sich im Wesentlichen über die gesamte Länge oder den Großteil der jeweiligen Seiten der Zwischenräume (15) erstrecken, wobei diese verdünnte und verlängerte Durchlässe für die Luft (A1, A2), somit mit einer begrenzten Dicke im Vergleich zu der Länge, definieren.

3. Belüftungsvorrichtung (10) nach einem der vorhergehenden Ansprüche, **dadurch gekennzeichnet, dass** in der ersten Kanalführung (39) die zu erneuernde Luft (A1) einem im Wesentlichen unidirektionalen Weg folgt, um von der ersten Öffnung (16, 18) zu dem Wärmetauscher (12) zu strömen, während die erneuerte Luft (A2), die aus dem Wärmetauscher (12) ausgeströmt ist, in die Platte (30) und die eine oder mehreren zweiten Kanalführungen (34, 35) einströmt, in denen, durch Biegung, ihre Strömungsrichtung umgekehrt wird, bis sie die zweite Öffnung (17, 19) erreicht.

4. Belüftungsvorrichtung (10) nach einem der vorhergehenden Ansprüche, **dadurch gekennzeichnet, dass** der Rahmen (14) eine Vielzahl von Kanten (56, 57, 58, 59) aufweist, innerhalb derer jeweilige Unterteilungen (60, 61, 62, 63) für Trennen der Kanalführungen (39, 34, 35) vorgesehen sind.

5. Belüftungsvorrichtung (10) nach einem der vorhergehenden Ansprüche, **dadurch gekennzeichnet, dass** die erste Kanalführung (39) durch eine Trennwand (55) definiert ist, die zwei Segmente (52, 53) hat, die sich startend von den Enden der ersten Öffnung (16, 18) im Wesentlichen bis zu der zweiten Öffnung (17, 19) erstrecken, wo sie durch ein gebogenes Segment (54) verbunden sind.

6. Belüftungsvorrichtung (10) nach einem der vorhergehenden Ansprüche, **dadurch gekennzeichnet, dass** die Trennwand (40), die die erste Kanalführung (39) von der einen oder mehreren zweiten Kanalführungen (34, 35) trennt, im Wesentlichen U-förmig ist und zwei Segmente (64, 66) aufweist, die sich startend von der zweiten Öffnung (17, 19) erstrecken und durch ein gebogenes Segment (67) verbunden sind, das sich vor einem oder mehreren Kanälen (32) für den Zugang der erneuerten Luft (A2) in die Platte (30) befindet.

7. Belüftungsvorrichtung (10) nach Anspruch 6, **dadurch gekennzeichnet, dass** die eine oder mehreren zweiten Kanalführungen (34, 35) an einer Seite durch die Trennwand (40) und an der anderen Seite durch eine Trennwand (69), definiert ist, die sich gebogen von den Kanälen (32) bis zu der zweiten Öffnung (17, 19) erstreckt.

8. Belüftungsvorrichtung (10) nach einem der Ansprüche 6 oder 7, **dadurch gekennzeichnet, dass** Umlenker (33) in dem einen oder mehreren Kanälen (32) positioniert sind, mittels derer die Strömung der Luft (A2) in mehrere Komponenten getrennt wird.

9. Belüftungsvorrichtung (10) nach Anspruch 8, **dadurch gekennzeichnet, dass** zusätzliche Umlenker (36, 37) in der einen oder mehreren zweiten Kanalführungen (34, 35) positioniert sind, die so konfiguriert sind, dass sie die Strömung, wie durch die Umlenker (33) des einen oder der mehreren Kanäle (32) getrennt, aufrechterhält.

10. Belüftungsvorrichtung (10) nach Anspruch 9, **dadurch gekennzeichnet, dass** die zusätzlichen Umlenker (36, 37) gebogen sind, um stetig und gleichmäßig die Richtung der Luft (A2) zu verändern, bis ihre Richtung im Wesentlichen umgekehrt ist.

11. Belüftung Vorrichtung (10) nach einem der vorhergehenden Ansprüche, **dadurch gekennzeichnet, dass,** wenn verschiedene zweite Kanalführungen (34, 35) vorgesehen sind, diese durch eine kurvenförmige Trennwand (50), die sich von dem Ausgang des einen oder der mehreren Kanäle (32) in die Nähe der zweiten Öffnung (17, 19) erstreckt, getrennt sind.

12. Belüftungsvorrichtung (10) nach einem der vorhergehenden Ansprüche, **dadurch gekennzeichnet, dass** die erste Öffnung (16, 18) an einer Seite des Zwischenraums (15) gegenüberliegend zu dem einen erzeugt ist, wo die zweite Öffnung (17, 19) erzeugt ist.

13. Belüftungsvorrichtung (10) nach Anspruch 12, **dadurch gekennzeichnet, dass** die erste Öffnung (16, 18) an der Unterseite des Zwischenraums (15) positioniert ist und die zweite Öffnung (17, 19) an der Oberseite des Zwischenraums (15) positioniert ist.

14. Belüftungsvorrichtung (10) nach einem der vorhergehenden Ansprüche, **dadurch gekennzeichnet, dass** der Zwischenraum (15) ringförmig ist und daher die Wand (13) vollständig umgibt.

15. Belüftungsvorrichtung (10) nach Anspruch 14, **dadurch gekennzeichnet, dass** der Zwischenraum (15) eine im Wesentlichen konstanten Dicke hat.

16. Belüftungsvorrichtung (10) nach einem der vorhergehenden Ansprüche, **dadurch gekennzeichnet, dass** die Wand (13) und der Rahmen (14) im Wesentlichen eben zu einander sind.

17. Belüftungsvorrichtung (10) nach einem der vorhergehenden Ansprüche, **dadurch gekennzeichnet, dass** sie eine Abdeckung (24) aufweist, die lösbar mit dem Gehäuse (11) verbunden ist, und mit der Wand (13) und dem Rahmen (14), die durch den Zwischenraum (15) getrennt sind, vorgesehen ist.

18. Belüftungsvorrichtung (10) nach einem der vorhergehenden Ansprüche, **dadurch gekennzeichnet, dass** sie ein schallabsorbierendes Gerät (20) aufweist, das stromabwärts eines Flügelrads (45) für das Ansaugen der erneuerten Luft (A2) innerhalb des Gehäuses (11) installiert ist.

19. Belüftungsvorrichtung (10) nach Anspruch 18, **dadurch gekennzeichnet, dass** das schallabsorbierende Gerät (20) neben dem einen oder den mehreren Kanälen (32) für den Zugang der Luft (A2) auf die Platte (30) positioniert ist.

20. Belüftungsvorrichtung (10) nach einem der vorhergehenden Ansprüche, **dadurch gekennzeichnet, dass** das Gehäuse (11) einen Auslass (22) für den Ausgang der Luft (A1) aufweist, die von dem Wärmetauscher (12) kommt, und einen Einlass (23) für den Zugang der erneuerten Luft (A2) in den Wärmetauscher (12), in denen jeweilige Rückschlagventile (42, 47) integriert sind.

## Revendications

1. Appareil de ventilation (10), comprenant un boîtier (11) dans lequel est logé un échangeur de chaleur (12) qui permet un échange de chaleur entre l'air (A1) à renouveler provenant de l'intérieur d'un environnement et l'air de renouvellement (A2) provenant de l'extérieur dudit environnement, dans lequel sur un côté dudit boîtier (11) est positionné un panneau (13) séparé d'un cadre (14) au moyen d'un espace intermédiaire (15) qui définit, sur différents côtés, au moins une première ouverture (16, 18) pour l'entrée dudit air (A1) à renouveler et au moins une seconde ouverture (17, 19) pour la sortie dudit air de renouvellement (A2), **caractérisé en ce que** ledit boîtier (11) comprend une plaque (30) dans laquelle sont créées au moins une première canalisation (39), configurée pour créer un rétrécissement de la section de passage dudit air (A1) à renouveler depuis ladite première ouverture (16, 18) vers ledit échangeur de chaleur (12), et une ou plusieurs secondes canalisations (34, 35), séparées de ladite première canalisation (39) au moyen d'au moins un panneau de séparation (40) et configuré pour créer un élargissement de la section de passage dudit air de renouvellement (A2) depuis ledit échangeur de chaleur (12) vers ladite seconde ouverture (17, 19).

2. Appareil de ventilation (10) selon la revendication 1, **caractérisé en ce que** lesdites ouvertures (16, 17, 18, 19) s'étendent sensiblement sur toute la longueur ou sur la plupart des côtés respectifs dudit espace intermédiaire (15), définissant des passages amincis et allongés pour l'air (A1, A2), donc avec une épaisseur limitée par rapport à la longueur.

3. Appareil de ventilation (10) selon l'une quelconque des revendications précédentes, **caractérisé en ce que dans** ladite première canalisation (39), ledit air (A1) à renouveler suit un trajet sensiblement unidirectionnel pour s'écouler de ladite première ouverture (16, 18) vers ledit échangeur de chaleur (12), tandis que ledit air de renouvellement (A2), étant sorti de l'échangeur de chaleur (12), pénètre dans ladite plaque (30) et dans lesdites une ou plusieurs secondes canalisations (34, 35) dans lesquelles, par courbure, il inverse sa direction d'écoulement jusqu'à ce qu'il atteigne ladite seconde ouverture (17, 19).

4. Appareil de ventilation (10) selon l'une quelconque des revendications précédentes, **caractérisé en ce que** ledit cadre (14) comprend une pluralité de bords (56, 57, 58, 59) à l'intérieur desquels des cloisons (60, 61, 62, 63) respectives sont prévues pour séparer lesdites canalisations (39, 34, 35).

5. Appareil de ventilation (10) selon l'une quelconque des revendications précédentes, **caractérisé en ce que** ladite première canalisation (39) est définie par un panneau de séparation (55) ayant deux segments (52, 53) qui s'étendent à partir des extrémités de ladite première ouverture (16, 18) sensiblement jusqu'à ladite seconde ouverture (17, 19), où ils sont reliés par un segment incurvé (54).

6. Appareil de ventilation (10) selon l'une quelconque des revendications précédentes, **caractérisé en ce que** ledit panneau de séparation (40) séparant ladite première canalisation (39) de ladite ou desdites secondes canalisations (34, 35) est sensiblement en forme de U et comprend deux segments (64, 66) qui s'étendent à partir de ladite seconde ouverture (17, 19) et sont reliés par un segment incurvé (67) situé devant un ou plusieurs conduits (32) pour l'entrée dudit air de renouvellement (A2) dans ladite plaque (30).

7. Appareil de ventilation (10) selon la revendication 6, **caractérisé en ce que** lesdites une ou plusieurs secondes canalisations (34, 35) sont définies d'un côté par ledit panneau de séparation (40) et, de l'autre côté, par un panneau de séparation (69) qui, incurvé, s'étend depuis lesdits conduits (32) jusqu'à ladite seconde ouverture (17, 19).

8. Appareil de ventilation (10) selon la revendication 6 ou 7, **caractérisé en ce que** des déviateurs (33) sont positionnés dans lesdits un ou plusieurs conduits (32) au moyen desquels le flux d'air (A2) est divisé en plusieurs composants.

9. Appareil de ventilation (10) selon la revendication 8, **caractérisé en ce que** des déviateurs supplémentaires (36, 37) sont positionnés dans lesdites une ou plusieurs secondes canalisations (34, 35), configurées pour maintenir l'écoulement divisé par lesdits déviateurs (33) desdits un ou plusieurs conduits (32).

10. Appareil de ventilation (10) selon la revendication 9, **caractérisé en ce que** lesdits déviateurs supplémentaires (36, 37) sont incurvés de manière à faire varier progressivement et uniformément la direction de l'air (A2), jusqu'à inverser sensiblement sa direction.

11. Appareil de ventilation (10) selon l'une quelconque des revendications précédentes, **caractérisé en ce que** si plusieurs secondes canalisations (34, 35) sont prévues, elles sont divisées par un panneau de séparation de forme curviligne (50) qui s'étend de la sortie dudit ou desdits conduits (32) à la proximité de ladite seconde ouverture (17, 19).

12. Appareil de ventilation (10) selon l'une quelconque des revendications précédentes, **caractérisé en ce que** ladite première ouverture (16, 18) est créée sur un côté dudit espace intermédiaire (15) opposé à celui où ladite seconde ouverture (17, 19) est créée.

13. Appareil de ventilation (10) selon la revendication 12, **caractérisé en ce que** ladite première ouverture (16, 18) est positionnée sur le côté inférieur dudit espace intermédiaire (15) et ladite seconde ouverture (17, 19) est positionnée sur le côté supérieur dudit espace intermédiaire (15).

14. Appareil de ventilation (10) selon l'une quelconque des revendications précédentes, **caractérisé en ce que** ledit espace intermédiaire (15) est annulaire et donc entoure complètement ledit panneau (13).

15. Appareil de ventilation (10) selon la revendication 14, **caractérisé en ce que** ledit espace intermédiaire (15) a une épaisseur sensiblement constante.

16. Appareil de ventilation (10) selon la revendication précédente, **caractérisé en ce que** ledit panneau (13) et ledit cadre (14) sont sensiblement coplanaires.

17. Appareil de ventilation (10) selon l'une quelconque des revendications précédentes, **caractérisé en ce qu'**il comprend un couvercle (24) relié de manière amovible audit boîtier (11) et muni dudit panneau (13) et dudit cadre (14) qui sont séparés par ledit espace intermédiaire (15).

18. Appareil de ventilation (10) selon l'une quelconque des revendications précédentes, **caractérisé en ce qu'**il comprend un dispositif d'absorption acoustique (20) installé en aval d'une turbine (45) pour l'aspiration dudit air de renouvellement (A2) à l'intérieur dudit boîtier (11).

19. Appareil de ventilation (10) selon la revendication 18, **caractérisé en ce que** ledit dispositif d'absorption acoustique (20) est positionné à côté desdits un ou plusieurs conduits (32) pour l'entrée de l'air (A2) sur la plaque (30).

20. Appareil de ventilation (10) selon l'une quelconque des revendications précédentes, **caractérisé en ce que** ledit boîtier (11) comprend une sortie (22) pour la sortie de l'air (A1) provenant dudit échangeur de chaleur (12) et une entrée (23) pour l'entrée de l'air de renouvellement (A2) dans ledit échangeur de chaleur (12), dans lequel des clapets anti-retour (42, 47) respectifs sont intégrés.
